# EUROPÄISCHE PATENTSCHRIFT

(11) **EP 1 531 172 B1**
(45) Veröffentlichungstag und Bekanntmachung des Hinweises auf die Patenterteilung: **16.08.2006**
(21) Anmeldenummer: 04026694.2
(22) Anmeldetag: 10.11.2004
(51) Int. Cl.: C09D 123/04, C08F 220/18, C09K 3/10

(54) **Einkomponentige Klebedichtmasse auf Basis einer wässrigen Polyacrylatdispersion sowie deren Verwendung**
One component adhesive composition of aqueous polyacrylate dispersions and use thereof
Composition adhesive a composant unique a partir d'une dispersion aqueuse de polyacrylate et son utilisation

(30) Priorität: 11.11.2003 DE 10352673
(43) Veröffentlichungstag der Anmeldung: 18.05.2005
(73) Patentinhaber: Weiss Chemie + Technik GmbH & Co. KG, 35708 Haiger (DE)
(72) Erfinder: Jäger, Ralf-Jürgen, 57299 Burbach (DE); Haber, Sven, 35708 Haiger (DE); Diehlmann, Franz, 35708 Haiger (DE)
(74) Vertreter: Tomerius, Isabel

(56) Entgegenhaltungen:
- US-A- 4 478 990
- US-A- 5 705 561

## Beschreibung

Die Erfindung betrifft eine einkomponentige Klebedichtmasse auf der Basis einer Polyacrylat-haltigen Polymerdispersion in einem wässrigen Medium sowie deren Verwendung als Fugendichtmasse und zum Verkleben von Folien, insbesondere im Baubereich.

Seit einigen Jahren werden zur Gebäudeabdichtung so genannte Dampfsperren oder Dampfbremsen eingesetzt Üblicherweise handelt es sich dabei um Polyolefin-Folien, die mittels einer Klebedichtmasse im Innenraum-, Außenwand- und Dachbereich geklebt werden, um den Luftaustausch und die Wasserdampfdiffusion aus den Wohnräumen in die Außenwände und in die Außendämmung der Cebäudehülle zu verhindern. Zweck dieser Maßnahme ist es, durch die erzielte Luft- und Winddichtigkeit der Gebäudehülle eine Energieeinsparung zu bewirken, wie sie beispielsweise in der Energieeinsparverordnung EnEv 2002 (DIN 4108-7) vorgeschrieben ist.

Bei den verwendeten Klebedichtmassen handelt es sich um Dichtmassen, die auch nach Abdampfen der im Nasszustand enthaltenen Lösemittel dauerhaft selbstklebende Eigenschaften beibehalten. Anfänglich wurden zur Verklebung der Dampfsperren praktisch ausschließlich so genannte lösemittelhaltige Klebedichtmassen eingesetzt, die einen Lösemittelanteil von größer 50 % aufwiesen, wobei unter Lösemitteln hier organische Lösemittel verstanden werden. Diese einen hohen Anteil organische Lösemittel enthaltenden Klebedichtmassen müssen aufgrund ihres starken Schrumpfverhaltens bei der Klebstoffaushärtung mit so genannten Anpresslatten zur Folienverklebung verarbeitet werden. Dieses Verfahren ist sehr aufwändig. Nachteilig ist weiterhin, dass die Menge der abdampfenden organischen Lösemittel zu einer deutlichen Belastung des Arbeitsplatzes mit unter Umständen gesundheitsschädlichen Auswirkungen während der Verarbeitungszeit führen. Darüber hinaus kommt es insbesondere bei der Altbausanierung zu einer teilweise nicht akzeptablen Geruchsbelästigung in den unmittelbar nach der Renovierung weiter bewohnten Wohnräumen. Die Brennbarkeit der organischen Lösemittel stellt ein weiteres Gefährdungspotential der lösemittelhaltigen Klebedichtmassen dar.

Angesichts dieser Nachteile der Klebedichtmassen mit einem hohen Anteil an organischen Lösemitteln sind seit einigen Jahren so genannte lösemittelfreie Dispersionsdichtmassen im Einsatz. Sie basieren auf thixotropierten wässrigen Polymer-Dispersionen, insbesondere Polyacrylat-Dispersionen, mit einem Feststoffanteil von üblicherweise mindestens 60 %. Diese Dispersions-Dichtmassen sind im Wesentlichen frei von organischen Lösemitteln, und oft enthalten sie nur Anteile an organischen Lösemitteln im ppm-Bereich. Die lösemittelfreien Dispersionsmassen eignen sich besonders zum Verkleben von Dampfsperrenfolien auf saugfähige, trockene und staubfreie Bauwerkstoffe. Die Verklebung der Folien kann wegen des günstigen Schrumpfverhaltens und der thixotropen Eigenschaften der lösemittelfreien Dispersionsmassen in der Regel auch ohne Verwendung einer Anpresslatte erfolgen.

Deutlich ungünstiger sind die Ergebnisse jedoch, wenn lösemittelfreie Dispersions-Klebedichtmassen auf nicht-saugenden Untergründen angewendet werden, zum Beispiel auf metallischen Untergründen, Fliesen, Bauwerkstoffen mit Farbanstrichen oder im Falle von Folienüberlappungen. Hier kann die zur Aushärtung der Klebedichtmassen notwendige Feuchtigkeitsabgabe weder in den Untergrund noch durch die angeklebte dampfdiffusionsdichte Folie erfolgen. Die Anwendungsvorschriften für lösemittelfreie Klebedichtmassen sehen daher vor, dass bei Verarbeitung auf nicht-saugenden Untergründen im Kontaktklebeverfahren gearbeitet werden muss. Dies bedeutet, dass die zunächst auf beiden miteinander zu klebenden Gegenflächen, also zum Beispiel auf dem nicht-saugenden Untergrund und auf der Dampfsperrenfolie, aufgebrachte Klebedichtmasse zunächst angetrocknet wird, bevor die zu verbindenden Gegenflächen aufeinandergepresst werden. Das Kontaktklebeverfahren ist damit aufwändiger und langwieriger als das so genannte Nassklebeverfahren, bei dem lediglich einseitig Klebedichtmasse aufgetragen werden muss und die Gegenflächen sofort aneinandergepresst werden können. Beim Anbringen von Dampfsperren wird in der Praxis daher auch bei Verarbeitung nichtsaugender Untergründe häufig das Nassklebeverfahren anstelle des Kontaktklebeverfahrens eingesetzt, was dann im Ergebnis zu einer ungenügenden Abdichtung (zu geringer Festigkeit / nicht ausreichendem Durchhärten der Klebedichtmasse) führt.

Die Klebedichtmassen werden üblicherweise in Polyethylen-Kartuschen oder Aluminium/Polyethylen-Schlauchbeuteln geliefert und verarbeitet. Aus diesen Behältnissen wird die Klebedichtmasse im Einsatzfall unter Druck mit einer Kartuschen- oder Beutel-Spritzpistole herausgepresst. Während lösemittelfreie Klebedichtmassen in der Regel eine hohe Lagerstabilität aufweisen, besteht bei lösemittelhaltigen Klebedichtmassen das Problem, dass das Lösemittel im Lauf der Zeit durch den Kunststoff des Aufbewahrungsbehälters hindurch diffundiert. Die hohe Diffusionsfähigkeit der organischen Lösemittel, die sich bei der Verarbeitung lösemittelhaltiger Klebedichtmassen auf nicht-saugenden Untergründen als Vorteil erweist, da das Lösemittel durch die Dampfsperrenfolie abdiffundieren kann, stellt hinsichtlich der Lagerstabilität in den herkömmlichen Aufbewahrungsbehältnissen also einen Nachteil dar.

Zusammenfassend kann also festgehalten werden, dass herkömmliche Klebedichtmassen mit einem hohen Anteil an organischen Lösemitteln zwar Vorteile bei der Verarbeitung auf nicht-saugenden Untergründen aufweisen, wegen ihrer Kennzeichnung nach Gefahrstoffverordnung als brennbare und gesundheitsgefährdende Stoffe unter Umwelt- und Gesundheitsgesichtspunkten jedoch nicht mehr akzeptabel sind. Dagegen sind lösemittelfreie Klebedichtmassen in Bezug auf ihre Umwelt- und Gesundheitsbelastung deutlich vorteilhafter und ihre Lagerstabilität ist höher, dafür ist jedoch ihre Verarbeitbarkeit gerade auf nicht-saugenden Untergründen erheblich schwieriger und zeitraubender und führt häufig nicht zu den gewünschten Ergebnissen.

Insgesamt bestand daher ein Bedarf an einer Klebedichtmasse, die sich gut auch auf nicht-saugenden Untergründen und sowohl im Nass- als auch im Kontaktklebeverfahren verarbeiten lässt, dabei aber gleichzeitig eine gute Lagerstabilität in den üblichen Kunststoffbehältnissen aufweist und ein möglichst geringes Gefährdungspotential für die Umwelt und die Gesundheit des Verarbeiters darstellt. Bevorzugt sollte die Klebedichtmasse nach derzeit gültigen Gefahrstoffverordnungen nicht mit Gefahrensymbol gekennzeichnet werden müssen.
**Aufgabe** der Erfindung ist es, eine derartige Klebedichtmasse bereitzustellen.

Die Lösung dieser Aufgabe gelingt mit der einkomponentigen Klebedichtmasse gemäß Anspruch 1. Bevorzugte Weiterbildungen der Klebedichtmasse sind in den Unteransprüchen beschrieben. Die Erfindung betrifft weiterhin die Verwendung der Klebedichtmasse gemäß Anspruch 27.

In einem ersten Aspekt betrifft die Erfindung also eine einkomponentige Klebedichtmasse, welche eine Polyacrylat-haltige Polymerdispersion in einem wässrigen Medium enthält. Zusätzlich zum wässrigen Medium umfasst die Klebedichtmasse außerdem 5 bis 30 Gew.-%, bezogen auf die Gesamtmenge der Klebedichtmasse im Nasszustand, eines Gemisches aus organischen Lösemitteln. Das Lösemittel-Gemisch setzt sich dabei aus wenigstens zwei der folgenden Komponenten zusammen: A) einem bei 25 °C flüssigen Alkohol mit einem Siedepunkt von höchstens 260 °C, B) einem nicht-halogenierten Kohlenwasserstoff mit einem Siedepunkt im Bereich von 100 bis 260 °C und C) einem Glykolether oder Ester mit einem Siedepunkt jeweils im Bereich von 100 bis 260 °C, wobei im Ester der Säurerest 2 bis 4 Kohlenstoffatome und der Alkoholrest 4 bis 8 Kohlenstoffatome aufweist.

Unter "Nasszustand" der Klebedichtmasse soll im Folgenden der Zustand verstanden werden, in dem im Wesentlichen noch keine Lösemittel aus der Klebedichtmasse verdampft sind. Es handelt sich um den Zustand, in dem die Klebedichtmasse nach ihrer Herstellung vorliegt und der auch bei fachgerechter Lagerung in einem dicht abgeschlossenen Behälter, zum Beispiel in einem Kunststoffbeutel oder in einer Kartusche, zumindest während der vorgesehenen Haltbarkeitsdauer erhalten bleibt.

Bei dem Alkohol der Gruppe A) kann es sich um ein- oder mehrwertige Alkohole handeln. Bevorzugt werden Mono- oder Dialkohole eingesetzt. Die Gruppe A) umfasst sowohl aliphatische als auch aromatische Alkohole. Grundsätzlich kann es sich bei den Alkoholen der Gruppe A) um primäre, sekundäre oder tertiäre Alkohole handeln. Geeignete Vertreter der Gruppe A) sind beispielsweise 2-Ethylhexanol, 2-Ethylhexandiol oder Dodecanol. Weitere bevorzugte Alkohole der Gruppe A) sind wassermischbare Alkohole mit 1 bis 5 Kohlenstoffatomen. Unter einem "wassermischbaren Alkohol" wird dabei ein Alkohol verstanden, der sich mit einer Menge von über 50 g /l Wasser löst und mit dem Wasser ein einphasiges System bildet. Besonders bevorzugt als Komponenten der Gruppe A) sind primäre aliphatische Alkohole mit 1 bis 3 Kohlenstoffatomen und unter diesen besonders Ethanol.

Bei den Kohlenwasserstoffen der Gruppe B) kann es sich sowohl um aliphatische wie aromatische Kohlenwasserstoffe handeln, solange sie nicht-halogeniert sind und einen Siedepunkt im Bereich von 100 bis 260 °C aufweisen. Unter diesen sind besonders aliphatische naphthenische Kohlenwasserstoffe mit einem Siedepunkt im Bereich von 150 bis 230 °C geeignet. Vorteilhaft können kommerziell erhältliche Mineralöldestillate eingesetzt werden, insbesondere aromatenarme Mineralölfraktionen, deren Siedebereich in den angegebenen Bereich fällt.

Auch bei den Lösemitteln der Gruppe C) handelt es sich um kommerziell erhältliche Produkte. Bevorzugt als Glykolether sind solche mit einem Siedepunkt im Bereich von 120 bis 200 °C. Unter diesen besonders bevorzugt ist Butylglykolacetat (2-Butoxyethylacetat, Ethylenglykolmonobutyletheracetat). Beispiele besonders geeigneter Ester sind Butylacetat und Butylpropionat.

Das Lösemittel-Gemisch der erfindungsgemäßen Klebedichtmasse enthält jeweils eine Verbindung aus der Gruppe A) und der Gruppe B) oder der Gruppe A) und der Gruppe C) oder der Gruppe B) und der Gruppe C). Dies schließt jedoch nicht aus, dass aus jeder der Gruppen A), B) und C) eine Komponente im Lösemittel-Gemisch vorhanden ist. Gleichfalls ist es möglich, aus wenigstens einer der Gruppen A), B) oder C) mehr als nur eine Verbindung im Lösemittel-Gemisch zu verwenden. Bevorzugt sind Klebedichtmassen, in denen das Lösemittel-Gemisch jeweils wenigstens eine Verbindung aus den Gruppe A) und B) enthält oder wenigstens jeweils eine Verbindung aus den Gruppen A) und C). Als besonders vorteilhaft haben sich Klebedichtmassen herausgestellt, in denen das Lösemittel-Gemisch aus einer Kombination aus Ethanol und einem Gemisch nichthalogenierter, vorwiegend aliphatischer Kohlenwasserstoffe mit einem Siedebereich von 175 bis 220 °C besteht oder einem Gemisch von Ethanol mit Butylglykolacetat.

Die Gesamtmenge der Lösemittel, bezogen auf die Gesamtmenge an Klebedichtmasse im Nasszustand, liegt bevorzugt bei einer Untergrenze von über 10 Gew.-% und besonders bevorzugt zwischen 11 und 20 Gew.-%.

Welche Kombination der Komponenten A), B) und C) im Lösemittel-Gemisch der erfindungsgemäßen Klebedichtmasse zum Einsatz kommt, hängt unter anderem von Art und Zusammensetzung der übrigen Bestandteile der Klebedichtmassen ab sowie von der beabsichtigten Verwendung. Geeignete Mengen des Alkohols A) liegen bei 0 bis 99 Gew.-%, bezogen auf die Gesamtmenge der Komponenten A) + B) + C). Besonders geeignet liegt die Menge des Alkohols A) in einem Bereich von 40 bis 70 Gew.-%, bezogen auf die Gesamtmenge des Lösemittel-Gemisches.

Der Anteil des Kohlenwasserstoffs B) sowie des Lösemittels C), bezogen auf die Gesamtmenge von A) + B) + C), bewegt sich jeweils in einem Bereich von 0 bis 99 Gew.-% und insbesondere von 15 bis 60 Gew.-%. Es versteht sich dabei von selbst, dass sich die Gesamtmenge aller Komponenten A) + B) + C) im Lösemittel-Gemisch auf 100 % addiert.

Wie bereits erwähnt, sind solche Lösemittel-Gemische im Rahmen der Erfindung bevorzugt, in denen ein Alkohol aus der Gruppe A) vorhanden ist, entweder im Gemisch mit einer Komponente der Gruppe B) oder einer Komponente der Gruppe C). In derartigen Lösemittel-Gemischen beträgt der Anteil des Alkohols A) bevorzugt zwischen 30 und 70 Gew.-% und vorteilhaft zwischen 40 und 60 Gew.-%. Als besonders geeignet haben sich solche Lösemittel-Gemische herausgestellt, in denen der Alkohol A), insbesondere Ethanol, einen Anteil von 50 Gew.-% ausmacht Die restlichen 50 Gew.-% im Lösemittel-Gemisch gehen auf eine oder mehrere Komponenten der Gruppe B) oder auf eine oder mehrere Komponenten der Gruppe C) zurück.

Die wässrige Polymerdispersion, die neben dem Lösemittel-Gemisch in der einkomponentigen Klebedichtmasse vorhanden ist, macht zweckmäßig etwa 30 bis 95 Gew.-% der Gesamtmenge der Klebedichtmasse im Nasszustand aus. Bevorzugt sind Anteile von 40 bis 70 Gew.-% der wässrigen Polymerdispersion und insbesondere 40 bis 55 Gew.-%.

Der Polymerisatgehalt in der wässrigen Polymerdispersion liegt vorteilhaft bei 30 bis 85 Gew.-%, bevorzugt bei 45 bis 75 Gew.-% und besonders zweckmäßig bei 55 bis 75 Gew.-%.

Als Polyacrylat-haltige Polymerdispersion kommen grundsätzlich alle Polymerdispersionen in einem wässrigen Medium in Betracht, die einen Anteil an Acrylatpolymer enthalten. Derartige Polyacrylat-haltigen Polymerdispersionen in wässrigem Medium sind grundsätzlich bekannt und finden beispielsweise im Bereich von (Klebe)Dichtmassen, Klebstoff- oder Beschichtungszusammensetzungen Anwendung. In den wässrigen Dispersionen kann das Polyacrylat im Gemisch mit anderen dispergierten Polymeren vorliegen. Derartige gemischte Polymer-Dispersionen sind grundsätzlich ebenfalls bereits bekannt und finden in den genannten Gebieten Anwendung. Lediglich beispielhaft für Polymere, die mit dem Polyacrylat im Gemisch in der wässrigen Dispersion vorliegen können, seien andere Vinylpolymere wie beispielsweise Vinylacetat oder Styrol genannt. Besonders geeignet zur Verwendung als Polymere (Polyacrylat oder sonstiges Polymer) in der Dispersion sind solche, die eine Glasübergangstemperatur (Tg) von unter 10 °C und besonders unter 0 °C, insbesondere unter - 10 °C, besonders bevorzugt unter -30 °C, besitzen.

Vorteilhaft beträgt der Anteil an Polyacrylat in der wässrigen Polymerdispersion mindestens 50 Gewichtsteile, bezogen auf 100 Gewichtsteile Polymer in der Dispersion. In einer besonders bevorzugten Ausführungsform sind außer Acrylatpolymeren keine weiteren Polymere in der wässrigen Polymerdispersion enthalten. Bei der wässrigen Dispersion handelt es sich in diesem Fall also um eine reine Polyacrylat-Dispersion.

Als Polyacrylat-Polymer kann grundsätzlich jedes Acrylat-Polymer eingesetzt werden, das bereits bisher in wässrigen Dispersionen auf dem Gebiet der Dichtmassen, Klebedichtmassen, Klebstoffe oder Beschichtungen zum Einsatz kam. Bevorzugte Polyacrylat-Polymere sind solche auf der Basis von C₁₋₂₄-Alkyl(meth)acrylaten. Von Vorteil werden Copolymere von (Meth)acrylsäurealkylestern mit 1 bis 12 Kohlenstoffatomen im Alkylrest und vorzugsweise 2 bis 8 Kohlenstoffatomen im Alkylrest eingesetzt. Im Rahmen der Erfindung besonders bevorzugt sind Copolymere auf der Basis von 2-Ethylhexylacetat und/oder Butylacetat. Die copolymerisierbaren Monomere sind dabei bevorzugt ausgewählt aus ungesättigten Carbonsäuren, insbesondere (Meth)acrylsäure, Vinylmonomeren, insbesondere Vinylestern oder Vinylaromaten, und monoolefinisch ungesättigten, nicht aromatischen Kohlenwasserstoffen.

Lediglich beispielhaft für geeignete Polyacrylat-haltige Polymerdispersionen in wässrigem Medium sei auf die Dispersionen verwiesen, die in den folgenden Veröffentlichungen beschrieben sind: EP 0037923 A1, WO 95/21884 A1, EP 0490191 A2 und DE 19709723 A1.

Bevorzugte einkomponentige Klebedichtmassen der Erfindung enthalten neben der wässrigen Polymerdispersion auf Polyacrylat-Basis und dem Lösemittel-Gemisch lediglich noch Additive. Hierbei kann es sich um die üblichen Additive handeln, die bereits bisher in (Klebe)Dichtmassen, Klebstoffen oder Beschichtungszusammensetzung auf Basis von wässrigen Polymerdispersionen und insbesondere Polyacrylatdispersionen zum Einsatz gekommen sind. Unter Additiven sind hier insbesondere Füllstoffe, Tackifier, Rheologie-Modifikatoren, Weichmacher, pH-Regulatoren, Tenside, Entschäumer, Stabilisatoren, Haftvermittler, Trocknungsmittel, wasserlösliche anorganische Salze, Farbstoffe, Pigmente, Konservierungsmittel und Duftstoffe zu verstehen. Der Anteil an Additiven in der Klebedichtmasse liegt üblicherweise im Bereich von 0 bis 65 Gew.-%, bevorzugt 10 bis 50 Gew.-% und insbesondere 30 bis 50 Gew.-%. Diese Angaben beziehen sich - wie im Folgenden alle Mengenangaben, wenn nichts Anderes erwähnt ist - auf die Gesamtmenge der Klebedichtmasse im Nasszustand.

Handelt es sich bei den Additiven um Füllstoffe, sind diese zweckmäßig in einer Menge von 0 bis 40 Gew.-% in der erfindungsgemäßen Klebedichtmasse enthalten. Bevorzugte Mengen an Füllstoffen liegen zwischen 20 und 35 Gew.-%. Als Füllstoffe können insbesondere die üblichen anorganischen oder organischen Füllstoffe angesprochen werden. Beispielhaft seien Erdalkalimetallsulfate oder -carbonate genannt, Silikate, Metalloxide oder -hydroxide, Nussmehle, Natur- oder Synthetikfasem, insbesondere Gipsfasem, und Stäube, Flocken oder Mehle, die aus Kunststoffabfällen oder Kunststoffrecyclingmaterial gewonnen wurden.

Als weitere Additive können Tackifier verwendet werden, die der Klebedichtmasse zusätzliche selbstklebende Eigenschaften verleihen. Üblicherweise handelt es sich um klebrigmachende Harze wie Kohlenwasserstoffharze, Kolophoniumharze, Acrylester oder Polyisobutylen. Die Menge an Tackifiern in der Klebedichtmasse bewegt sich üblicherweise im Bereich von 0 bis 30 Gew.-% und bevorzugt 5 bis 15 Gew.-%.

Rheologie-Modifikatoren sind in der erfindungsgemäßen Klebedichtmasse im allgemeinen in einer Menge von 0 bis 20 Gew.-% enthalten. Bevorzugt liegt ihre Menge bei 0,5 bis 5 Gew.-%, bezogen auf die Gesamtmenge der Klebedichtmasse im Nasszustand. Geeignete Rheologie-Modifikatoren sind ausgewählt aus pyrogener Kieselsäure, Calciumcarbonat, insbesondere beschichteter Kreide, Cellulose-Derivate wie Carboxymethylcellulose, Kaolin, Acrylsäure- oder Rizinusderivate oder PUR-Verdicker.

Weichmacher sind in der einkomponentigen Klebemasse in der Regel in einer Menge von 0 bis 20 Gew.-% und insbesondere 5 bis 15 Gew.-% enthalten. Bevorzugte Weichmacher sind ausgewählt aus Phthalaten, Acrylsäureestern und aliphatischen Kohlenwasserstoffen.

Die übrigen, vorstehend nicht näher beschriebenen Additive sind in der erfindungsgemäßen Klebedichtmasse im Allgemeinen in einer Menge von 0 bis 5 Gew.-% enthalten.

Ob und welche Additive in der Klebedichtmasse eingearbeitet werden, hängt von der beabsichtigten Verwendung der Dichtmasse und der Art und der Menge der sonst in der Klebedichtmasse enthaltenen Komponenten ab. Bevorzugt wird die Klebedichtmasse so konfektioniert, dass sie einen Trockensubstanzanteil von größer als 35 Gew.-% aufweist. Bevorzugt ist ein Trockensubstanzanteil von größer als 50 Gew.-%, besonders größer als 65 Gew.-% und insbesondere größer als 70 Gew.-%.

Besonders vorteilhaft einsetzbar ist die erfindungsgemäße einkomponentige Klebedichtmasse, wenn ihre Inhaltsstoffe so gewählt sind, dass die Klebedichtmasse insgesamt nach den Gefahrstoff-Richtlinien 1999/45/EG des Europäischen Parlaments und 2001/60/EG der EU-Kommission sowie nach Gefahrstoffverordnung (GefStoffV) in der Fassung vom 15. November 1999 (BGBl. I 1999 S. 2233, 2000 S. 739, 747, 932, 1045; 4.7.2002 S. 2514 ⁰²; 6.8.2002 S. 3082; 13.8.2002 S. 3185; 15.8.2002 S. 3302; 27.9.2002 S. 3777; 15.10.2002 S. 4123; 19.5.2003 S. 712 ⁰³; 29.8. 2003 S. 1697 ^{03a}) nicht mit Gefahrstoffsymbol gekennzeichnet werden muss.

Weiterhin ist es bevorzugt, wenn die Klebedichtmasse dauerhaft selbstklebende Eigenschaften besitzt. Dies ermöglicht es beispielsweise, fehlerhaft geklebte Dampfsperrenfolien abzulösen und erneut anzukleben, ohne dass nochmals Klebedichtmasse aufgebracht werden muss. Bevorzugt weisen die erfindungsgemäßen einkomponentigen Klebedichtmassen daher im Trockenzustand eine Anfangshaftung gemäß FINAT-Testmethode Nr. 9 (FINAT Technisches Handbuch, 6. Ausgabe 2001) von mindestens 0,5 N auf.

Unter "Trockenzustand" ist hier ein Zustand zu verstehen, den die Klebedichtmasse annimmt, wenn man sie mit einer Schichtdicke von 500 µm (nass) auf eine Unterlage aufträgt, die beschichtete Folie 16 h bei +70 °C lagert und danach erneut 16 h bei Raumklima akklimatisiert. Die Art der Unterlage hat bei der gewählten Auftragungsdicke und den Trocknungsbedingungen praktisch keinen Einfluss auf den erreichten Zustand der Klebedichtmasse. Lediglich beispielhaft sei daher als mögliche Unterlage ein handelsübliches, einseitig beschichtetes weißes Kunstdruckpapier mit einem Papiergewicht von 500 g/cm² und einer Stärke von 0,5 bis 0,55 mm genannt.

Im beschriebenen Trockenzustand besitzt die erfindungsgemäße Klebedichtmasse zudem bevorzugt eine Schälfestigkeit gegenüber Polyolefin-Folien von mindestens 4 N/50 mm in einem Temperaturbereich von -10 bis +50 °C. Die Schälfestigkeit wird dabei nach DIN EN 1895:2001 bestimmt.

Um eine gute Verarbeitungsfähigkeit und eine hohe Benetzung der abzudichtenden Folien sicherzustellen, weist die erfindungsgemäße Klebedichtmasse vorteilhaft eine Viskosität nach DIN EN 12092:2001 (Kegel-Platte-Viskosimeter-Verfahren; Scherrate 50 s⁻¹) von mindestens 5000 mPas auf. Bevorzugt liegt die Viskosität im Bereich von 15000 bis 25000 mPas.

Die erfindungsgemäße Klebedichtmasse kann nach den üblichen Verfahren mit herkömmlichen Vorrichtungen hergestellt werden. Hierzu werden die Komponenten der Zusammensetzung, gegebenenfalls bei erhöhter Temperatur, homogen miteinander vermischt. Falls gewünscht, kann die Masse bereits während der Herstellung oder im Anschluss an die vollständige Zugabe aller Komponenten im Vakuum entgast werden. Die Klebedichtmasse ist in allen für die Lagerung von Dichtmassen üblichen Behältnissen für längere Zeiträume lagerstabil. Bevorzugt erfolgt eine Verpackung in PE-Kartuschen oder Schlauchbeutel aus Aluminium/PE sowie in Druckflaschen.

Die erfindungsgemäße einkomponentige Klebedichtmasse vereinigt eine Vielzahl positiver Eigenschaften auf sich, die bisher nicht in einer einzigen Klebedichtmasse vereinigt werden konnten. Die Klebedichtmasse weist ein breites Haftungsspektrum zu unterschiedlichen Folienmaterialien auf und kann vorteilhaft mit allen marktüblichen Dampfsperren, Dampfbremsen oder Dachunterspannbahnen verwendet werden. Es wird eine gute Haftung zu allen saugenden und auch nicht saugenden Baustoffuntergründen erreicht. Die gezielte Auswahl der Lösemittel-Kombination ermöglicht eine schnelle Aushärtung der Klebedichtmasse durch Diffusion des Lösemittels durch die angeklebte Folie hindurch. Gleichwohl weisen die erfindungsgemäßen Klebedichtmassen eine hohe Lagerstabilität in den üblichen Aufbewahrungsbehältnissen wie zum Beispiel Folienbeutel aus Polyethylen oder Polyethylen-Kartuschen sowie Druckflaschen auf. Aufgrund der gezielten Auswahl der Lösemittel und aufgrund ihres geringen Anteils in der Klebedichtmasse werden nicht mit Gefahrstoffsymbol zu kennzeichnende Dichtmassen gemäß Gefahrstoffverordnung erhalten. Der Eigengeruch der Dichtmassen ist gering.

Ein weiterer Vorteil der Klebedichtmasse liegt darin, dass sie thixotrop eingestellt werden kann. Die Klebedichtmasse kann zudem so hergestellt werden, dass sie bei einem hohen Trockensubstanzanteil und einem geringen Volumenschwund eine niedrige Verarbeitungsviskosität besitzt. Aufgrund dessen kann die Klebedichtmasse auch in Druckflaschen verarbeitet werden.

Das Kleben mit der verbindungsgemäßen Klebedichtmasse kann sowohl im Nass- als auch im Kontaktklebeverfahren erfolgen. Das Nassklebeverfahren ist auch bei nicht saugenden Untergründen anwendbar, da das Lösemittel durch die anzuhebende Folie hindurch nach außen abdiffundieren kann. Die Verarbeitung kann ohne Anpresslatte erfolgen. Die Haftfähigkeit zu den im Baubereich üblichen Untergründen ist hoch, Delaminationen der Folien wurden nicht beobachtet. Auch die Wasserbeständigkeit ist ausgezeichnet, und ein Reemulgieren wurde nicht festgestellt.

Die erfindungsgemäße Klebedichtmasse kann pH-neutral formuliert werden. Bevorzugt liegt der pH-Wert im Bereich von 5 bis 10, insbesondere 7 bis 8,5, besonders bevorzugt bei 7,5 bis 8,5. Gegenüber metallischen Untergründen wird keine Korrosion beobachtet. Auf Gips- und zementösen Untergründen wurden keine Beeinträchtigungen festgestellt. Zudem ist die erfindungsgemäße Klebedichtmasse auch verträglich gegenüber Polyisobutylen-Massen. Ihre Einfrierbeständigkeit ist hoch und reicht in der Regel bis auf Temperaturen von - 26 °C hinab. Die Verarbeitbarkeit bei niedrigen Temperaturen ist sehr gut, und eine Verarbeitung der Klebedichtmasse ist regelmäßig bei unter 10 °C und in den meisten Fällen bei unter 3 °C ohne weiteres möglich.

Die positiven Eigenschaften der erfindungsgemäßen Klebedichtmasse werden anhand des nachfolgenden Beispiels und der durchgeführten Vergleichsversuche ersichtlich.

### Herstellungsbeispiel

51 Gewichtsteile (GT) einer wässrigen Polyacrylatdispersion (Acronal® V 205, BASF (Tg = -40 °C, Feststoffgehalt 70 Gew.-%, 30 Gew.-% Wasser)) werden mit 0,2 GT einer Carboxymethylcellulose (Walocell® MW 10.000 GB, Fa. Wolff Cellulosica), homogen gemischt und einige Stunden stehen gelassen. Danach werden 6 GT Ethanol und 22 GT Calciumcarbonat bei Raumtemperatur homogen zugemischt. Anschließend wird mit Triethanolamin der pH-Wert auf 7-8 eingestellt, bevor 9 GT eines Polyacrylsäure-n-butylesters (AcResin® DS 3500, BASF) zugegeben werden.
Nach erneuter Einstellung des pH-Wertes auf 7,5-8 werden noch folgende Komponenten zugemischt: 0,1 GT Biozid, 0,35 GT pyrogene Kieselsäure, 4,5 GT Scharrsol D60 (Friedrich Scharr KG) und 5 GT Butylglykolacetat. Abschließend wird im Vakuum entlüftet.

### Vergleichsbeispiel

Es wird wie im Herstellungsbeispiel vorgegangen, jedoch mit dem Unterschied, dass der Mischung kein Ethanol und kein Butylglykolacetat zugegeben wird.

Die nach dem Herstellungsbeispiel hergestellte erfindungsgemäße Klebedichtmasse und die Vergleichsmasse gemäß Vergleichsbeispiel wurden auf ihre Eigenschaften hin untersucht. Die durchgeführten Untersuchungen sind im Folgenden beschrieben, die Versuchsergebnisse in Tabelle 1 zusammengefasst.

### Bestimmung der Viskosität

Die Viskosität wurde nach DIN EN 12092:2001 bei 25 °C mit einem Kegel-Platte-Viskosimeter der Firma Paar Physica, Typ: Rheolab MC1, gemessen. Es wurde ein Messkörper MK21 bei einer Spaltbreite von 100 µm und einer Scherrate 1/s von 50 verwendet. Die Ablesung erfolgte nach 40 s.

### Bestimmung der Thixotropie

Mit einer Handdruckpistole wird auf die Vorderkante eines Mundspatels eine definierte Menge Klebedichtmasse (ca. 30 mm x 15 mm x 10 mm) aufgetragen. Die Standfestigkeit bzw. das Ablaufverhalten der Klebedichtmasse wird bei senkrechter Haltung des Mundspatels visuell beurteilt. Die Bewertung erfolgte nach den Einstufungen "in Ordnung (i.O.)", "mittel" oder "gering".

### Bestimmung des Ablaufverhaltens

Eine HPL-ABET-S-Platte im Format DIN A4 mit einer Stärke von 2mm (Abet GmbH, Herford) wird zunächst mit einem fettlösenden Benzinreiniger gereinigt. Im oberen Bereich mittig auf die Längsachse der Platte wird eine ausreichende Menge der Klebedichtmasse aufgetragen. Mittels Raupenspachtel (Alu-Blech mit auf einer Seite vorhandenen halbkreisförmigen Bohrung: Radius: 4,5 mm) wird eine ca. 200 mm lange Raupe gezogen und die Platte senkrecht (querliegende Raupe) eingespannt. Das Standvermögen bzw. die "Abrutschstrecke" der Klebedichtmasseraupe wird nach 16h (Lagerung im Klimaschrank bei +20 °C, 50 % rel. Luftfeuchtigkeit) in mm gemessen.
Zusätzlich wurde das Ablaufverhalten eines Klebedichtmassen-Kleckses (ca. 30 mm x 15 mm x 10 mm) auf analoge Weise bestimmt.

### Bestimmung des Oberflächenverhaltens (Korrosionstest)

Auf die mit fettlösendem Benzinreiniger gereinigte metallische Oberfläche wird eine Raupe aus Klebedichtmasse (Durchmesser ca. 7 mm) von 50 mm Länge aufgetragen und mittels Mundspatel auf eine Breite von 20 mm angedrückt. Nach 16 Stunden Klimalagerung bei +20 °C bei 50 % rel. Luftfeuchtigkeit wird die Raupe aus Klebedichtmasse mechanisch von der metallischen Oberfläche mittels Holzspachtel abgeschabt.
Die metallische Oberfläche wird auf Korrosion bzw. Fleckenbildung hin visuell auf "keine Korrosion", "leichte Korrosion" oder "starke Korrosion" bewertet.

### Bestimmung der Einfrierbeständigkeit

Eine auf Raumtemperatur akklimatisierte Kartusche Klebedichtmasse wird bei -26 °C 24 h lang aufbewahrt und anschließend auf Raumklima akklimatisiert. Dann wurde die Einfrierbeständigkeit durch visuelle Begutachtung der Klebedichtmasse bestimmt sowie durch Viskositätsmessung bestätigt

### Bestimmung der Klebrigkeit

Die Klebrigkeit wurde nach dem "Rolling ball tack", Test Methods for Pressure-Sensitive Adhesives, 7. Ausgabe, Pressure Sensitive Tape Council, Itasca, Illinois, (PTSC-6), bestimmt. Die Schichtdicken der Klebedichtmassen lagen bei 100µm und 1500µm.

### Bestimmung der Schälfestigkeit nach DIN EN 1895:2001

Die Prüfung erfolgte mit einer Dampfbremsenfolie aus LDPE nach DIN 4102-B2 (ferax® Dampfbremsen-Folie der Firma Ferax). Die Foliendicke betrug 0,2 mm, der S_{d}-Wert lag bei 173 m. Als Gegenfolie für die zu testende Polyolefinfolie diente eine dampfdiffusionsoffene dreilagige Dachunterspannbahn mit einer Barriereschicht, die beidseitig mit Polypropylen-Mikrofaservlies kaschiert ist (erhältlich von der Firma URSA unter der Bezeichnung URSA® Seco 4000). Die Dachunterspannbahn hat ein Gewicht von ca. 130 g/m², eine Wasserdampfdurchlässigkeit von mindestens 1200 g/m² 24h und einen S_{d}-Wert von kleiner als 0,02 m (beides nach E DIN EN ISO 12572, Klima A). Die Wasserdichtheit ist größer als 3000 mm (DIN EN 1928, Verfahren A, laut E DIN EN 13859-1).
Aus der zu testenden LDPE-Folie wird ein Stück im Format DIN A4 geschnitten und mit 50 mm breitem Klebeband an beiden Folien-Längsseiten auf eine flache Unterlage plan aufgeklebt. Anschließend wird die Klebedichtmasse raupenförmig aufgetragen und mit einem Leimzahnspachtel verteilt. Die Dachunterspannbahn, die auf ein Format DIN A 4 zugeschnitten wurde, wird innerhalb der offenen Zeit der Klebedichtmasse längsbündig auf die LDPE-Folie gelegt. Dann wird sie mit einer Handwalze (1130 g) langsam angerollt. Die Klebebänder werden daraufhin entfernt. Das Aushärten der Klebedichtmasse erfolgt bei normalem Raumklima 16 Stunden lang, anschließend 3 Tage lang bei +40 °C mit Umluft mit Dachunterspannbahn nach oben und erneut 16 Stunden lang bei Raumklima. Die Prüflinge werden dann mit einer Schneidmaschine auf 100 mm x 50 mm geschnitten. Anschließend werden die Prüflinge in einer Prüfmaschine Frank, Typ 81816, bei den angegebenen Temperaturen geprüft.

### Bestimmung des Diffusionsverhaltens

Zur Aufnahme der Klebedichtmasse dient eine herkömmliche Haushalts-Polyethylentüte (Maß: 70 x 100 mm, Stärke: 50 pm), wie sie üblicherweise zum Verpacken von Lebensmitteln verwendet wird. Nach Aufnahme des Taragewichts der leeren PE-Tüte werden 3-5 g Klebedichtmasse in die PE-Tüte eingewogen. Die PE-Tüte wird mit einem zum Verschließen derartiger Tüten üblichen Clipverschluss verschlossen. Die Klebedichtmasse wird mittels einer Handwalze (1130 g) durch einmaliges Hin- und Herrollen gleichmäßig in der Tüte verteilt. Das Bruttogewicht (PE-Tüte + Klebedichtmasse) wird ermittelt. Bei Lagerung im Klimaschrank (+20 °C / 50 % rel. Luftfeuchtigkeit) wird 7 Tage lang täglich das Bruttogewicht gewogen. Die Angabe des Gewichtverlusts in % wird, bezogen auf 100 Gew.-% flüchtige Bestandteile, dokumentiert

### Bestimmung des Aushärtungsverhaltens

Die Untersuchung dient der Beurteilung des Aushärteverhaltens der Klebedichtmassen bei geklebten dampfdiffusionsdichten PE-Folien auf nicht saugenden HPL-Oberflächen. Als HPL-Platte wird eine HPL-ABET-S-Platte (Stärke 2 mm, DIN A4; vgl. "Bestimmung des Ablaufverhaltens") verwendet. Als Polyolefinfolie dient eine FERAX-PE-Folie (DIN A4; vgl. "Bestimmung der Schälfestigkeit nach DIN EN 1895:2001 "). Nach Aufnahme des Taragewichts von HPL-Platte + Folie wird im oberen Bereich, mittig auf die Längsachse der HPL-Platte eine ausreichende Menge Klebedichtmasse aufgetragen und mittels Raupenspachtel (Alu-Blech mit auf einer Seite vorhandenen halbkreisförmigen Bohrung: Radius: 4,5 mm) daraus eine 200 mm lange Raupe aufgezogen. Die Folie wird bündig auf die HPL-Platte aufgelegt und mittels Handwalze (1130 g) angerollt. Das Bruttogewicht (HPL-Platte + Folie + Klebedichtmasse) wird ermittelt. Bei Lagerung im Klimaschrank (+20 °C / 50 % rel. Luftfeuchtigkeit) wird 7 Tage lang täglich das Bruttogewicht gewogen. Die Angabe des Gewichtverlusts in % wird im 24-Stunden-Rhythmus, bezogen auf 100 Gew.-% flüchtige Bestandteile, dokumentiert.

**Tabelle 1**

| **PRÜFUNGEN** | | **ERFINDUNGSGEMÄßES BEISPIEL** | **VERGLEICHSBEISPIEL** |
|---|---|---|---|
| **pH - Wert** | | 7,8 | 8,2 |
| **Dichte [g/cm**^{**3**}**]** | | 1,20 | 1,16 |
| **Trockensubstanz [%]** | (+105 °C) | 71,0 | 75,6 |
| **Viskosität [mPas]** | | 16900 | 17500 |
| **Thixotropie** | | i.O. | i.O. |
| **Ablaufverhalten [mm]** | (Raupe /Klecks) | 0 / 5 | 0/5 |
| **Verarbeitbarkeit +3 °C** | | sehr gut | sehr gut |
| **Einfrierbeständigkeit -26 °C** | | i.O. | i.O. |
| **Reemulgierverhalten** | | kein Reemulgieren | kein Reemulgieren |
| **Oberflächenverhalten/Korrosion auf** | | | |
| | Kupfer | keine | leichte |
| | Stahlblech | keine | keine |
| **Beflammung** | (Raupe + 1500 µm-Film) | b-sv* | b-sv* |
| **Aushärtungsverhalten** | | | |
| | Raupe, +20 °C/50 %, nicht abgedeckt, 7d | 53,5 | 22,9 |
| **Diffusionsverhalten** | | | |
| | PE-Tüte,+20 °C/50 %,7d | 31,2 | 11,9 |
| **Masseverlust** | | | |
| | PE-Kartusche, +40 °C/50 % rL**, 3 Wochen | kein | kein |
| **Rolling ball-Test [mm]** | 100 µm | 223 | 145 |
| | 1500 µm | 14 | 13 |
| **Schälfestigkeiten [N/50 mm]** | | | |
| Nassverklebung | +20°C | 11,1 | 29,0 |
| Nassverklebung | -10°C | 20,5 | 35,8 |
| Nassverklebung | +50°C | 4,3 | 5,1 |

| | | | |
|---|---|---|---|
| * b-sv = brennt selbstverlöschend; ** rL = relative Luftfeuchtigkeit | | | |

Die Versuche belegen, dass die erfindungsgemäße Klebedichtmasse in fast allen Untersuchungen Ergebnisse erreicht, die mit der lösemittelfreien Vergleichsmasse gleichwertig sind. Deutlich positivere Ergebnisse erreicht die erfindungsgemäße Klebedichtmasse hinsichtlich der Aushärtungseigenschaften und des Diffusionsverhaltens. Hier wird innerhalb desselben Zeitraums etwa das Zwei- bis Dreifache an flüchtigen Inhaltsstoffen aus der Klebedichtmasse abgegeben. Diese schnellere Aushärtung stellt in der Praxis einen bedeutenden Vorteil dar. Besonders vorteilhaft ist auch die schnellere Lösemittelabgabe durch Polyolefin-Materialien hindurch, da die erfindungsgemäße Klebedichtmasse auch bei Verklebung auf nicht-saugenden Untergründen ihre flüchtigen Bestandteile rasch durch die Folie hindurch abgeben kann und schnell aushärtet. Die Abgabe von Lösemittel durch die Polyolefin-Folie hindurch zeigt sich in den Versuchen auch daran, dass sich die Oberfläche der Folie nach dem Verkleben leicht wellt. Dadurch reißt aber der Klebedichtfilm nicht ab, und es werden hierdurch keine Undichtigkeiten hervorgerufen. Durch Bestimmung der Masseverluste bei Lagerung wurde bestätigt, dass die PE-Kartusche über 21 Tage bei 40 °C und 50 % relativer Luftfeuchtigkeit auch für die erfindungsgemäße Masse zur dauerhaften Lagerung geeignet ist.

## Patentansprüche

1. Einkomponentige Klebedichtmasse, welche eine Polyacrylat-haltige Polymerdispersion in einem wässrigen Medium enthält,
**dadurch gekennzeichnet,**
**dass** die Klebedichtmasse, bezogen auf deren Gesamtmenge im Nasszustand, 5 bis 30 Gew.-% eines Lösemittel-Gemishes umfasst, welches sich aus wenigstens zwei der folgenden Komponenten zusammensetzt:
A) einem bei 25 °C flüssigen Alkohol mit einem Siedepunkt von höchstens 260 °C,
B) einem nicht-halogenierten Kohlenwasserstoff mit einem Siedepunkt im Bereich von 100 bis 260 °C,
C) einem Glykolether mit einem Siedepunkt im Bereich von 100 bis 260 °C oder einem Ester mit einem Siedepunkt im Bereich von 100 bis 260 °C, dessen Säurerest 2 bis 4 Kohlenstoffatome und dessen Alkoholrest 4 bis 8 Kohlenstoffatome aufweist.

2. Klebedichtmasse gemäß Anspruch 1,
**dadurch gekennzeichnet,**
**dass** der Alkohol A) ein Alkohol mit 1 bis 5 Kohlenstoffatomen, bevorzugt ein primärer aliphatischer Alkohol mit 1 bis 3 Kohlenstoffatomen, insbesondere Ethanol, ist.

3. Klebedichtmasse gemäß Anspruch 1,
**dadurch gekennzeichnet,**
**dass** der Alkohol A) ausgewählt ist aus 2-Ethylhexanol, 2-Ethylhexandiol und Dodecanol.

4. Klebedichtmasse gemäß einem der vorhergehenden Ansprüche,
**dadurch gekennzeichnet,**
**dass** der Kohlenwasserstoff B) ein aliphatischer naphthenischer Kohlenwasserstoff mit einem Siedepunkt im Bereich von 150 bis 230 °C ist.

5. Klebedichtmasse gemäß einem der vorhergehenden Ansprüche,
**dadurch gekennzeichnet,**
**dass** das Lösemittel C) einen Siedepunkt im Bereich von 120 bis 200 °C aufweist und bevorzugt Butylglykolacetat, Butylacetat oder Butylpropionat ist.

6. Klebedichtmasse gemäß einem der vorhergehenden Ansprüche,
**dadurch gekennzeichnet,**
**dass** die wässrige Polymerdispersion, bezogen auf die Gesamtmenge der Klebedichtmasse im Nasszustand, in einer Menge von 30 bis 95 Gew.-%, bevorzugt 40 bis 70 Gew.-% und insbesondere 40 bis 55 Gew.-%, vorhanden ist.

7. Klebedichtmasse gemäß einem der vorhergehenden Ansprüche,
**dadurch gekennzeichnet,**
**dass** der Polymerisatgehalt in der wässrigen Polymerdispersion bei 30 bis 85 Gew.-%, bevorzugt bei 45 bis 75 Gew.-% und insbesondere bei 55 bis 75 Gew.-%, liegt.

8. Klebedichtmasse gemäß einem der vorhergehenden Ansprüche,
**dadurch gekennzeichnet,**
**dass** der Anteil an Polyacrylat in der wässrigen Polymerdispersion mindestens 50 Gewichtsteile, bezogen auf 100 Gewichtsteile Polymer, beträgt und insbesondere außer Polyacrylat keine weiteren Polymere in der wässrigen Polymerdispersion enthalten sind.

9. Klebedichtmasse gemäß einem der vorhergehenden Ansprüche,
**dadurch gekennzeichnet,**
**dass** das Polyacrylat-Polymer ein solches auf der Basis von C₁₋₂₄-Alkyl(meth)acrylaten ist und insbesondere ein Copolymer von (Meth)acrylsäurealkylester mit 1 bis 12 Kohlenstoffatomen im Alkylrest, vorzugsweise 2 bis 8 Kohlenstoffatomen im Alkylrest, mit wenigstens einem copolymerisierbaren Monomer, welches bevorzugt ausgewählt ist aus ungesättigten Carbonsäuren, insbesondere (Meth)acrylsäure, Vinylmonomeren, insbesondere Vinylestern oder Vinylaromaten, und monoolefinisch ungesättigten, nicht aromatischen Kohlenwasserstoffen.

10. Klebedichtmasse gemäß einem der vorhergehenden Ansprüche,
**dadurch gekennzeichnet,**
**dass** der Alkohol A) in einer Menge von 0 bis 99 Gew.-%, bevorzugt 40 bis 70 Gew.-%, bezogen auf die Gesamtmenge der Komponenten A) + B) + C), vorhanden ist.

11. Klebedichtmasse gemäß einem der vorhergehenden Ansprüche,
**dadurch gekennzeichnet,**
**dass** der Kohlenwasserstoff B) in einer Menge von 0 bis 99 Gew.-%, insbesondere von 15 bis 60 Gew.-%, bezogen auf die Gesamtmenge der Komponenten A) + B) + C), vorhanden ist.

12. Klebedichtmasse gemäß einem der vorhergehenden Ansprüche,
**dadurch gekennzeichnet,**
**dass** das Lösemittel C) in einer Menge von 0 bis 99 Gew.-%, insbesondere 15 bis 60 Gew.-%, bezogen auf die Gesamtmenge der Komponenten A) + B) + C), vorhanden ist

13. Klebedichtmasse gemäß einem der vorhergehenden Ansprüche,
**dadurch gekennzeichnet,**
**dass** das Lösemittel-Gemisch aus einer Kombination der Komponenten A) + B) oder A) + C) besteht.

14. Klebedichtmasse gemäß Anspruch 13,
**dadurch gekennzeichnet,**
**dass** der Alkohol A) im Lösemittel-Gemisch in einer Menge von 30 bis 70 Gew.-%, insbesondere 40 bis 60 Gew.-% und bevorzugt 50 Gew.-%, enthalten ist.

15. Klebedichtmasse gemäß einem der vorhergehenden Ansprüche,
**dadurch gekennzeichnet,**
**dass** sie aus der Polyacrylat-haltigen wässrigen Polymerdispersion, dem Lösemittel-Gemisch und gegebenenfalls Additiven besteht.

16. Klebedichtmasse gemäß einem der vorhergehenden Ansprüche,
**dadurch gekennzeichnet,**
**dass** sie Additive in einer Menge von 0 bis 65 Gew.-%, bevorzugt 10 bis 50 Gew.-% und insbesondere 30 bis 50 Gew.-%, enthält,.

17. Klebedichtmasse gemäß Anspruch 16,
**dadurch gekennzeichnet,**
**dass** als Additive Füllstoffe in einer Menge von 0 bis 40 Gew.-% und bevorzugt 20 bis 35 Gew.-% enthalten sind.

18. Klebedichtmasse gemäß Anspruch 16 oder 17,
**dadurch gekennzeichnet,**
**dass** als Additive anorganische oder organische Füllstoffe vorhanden sind, insbesondere Füllstoffe ausgewählt aus Erdalkalimetallsulfaten oder -carbonaten, Silikaten, Metalloxiden und -hydroxiden, aus Nussmehlen, Natur- und Synthetikfasern, insbesondere Gipsfasern, und Kunststoffabfällen oder Kunststoffrecyclingmaterial in Form von Stäuben, Flocken oder Mehlen.

19. Klebedichtmasse gemäß einem der Ansprüche 16 bis 18,
**dadurch gekennzeichnet,**
**dass** sie Tackifier in einer Menge von 0 bis 30 Gew.-% und bevorzugt 5 bis 15 Gew.-% enthält, wobei der Tackifier insbesondere ausgewählt ist aus Kohlenwasserstoffharzen, Kolophoniumharzen, Acrylestern oder Polyisobutylen.

20. Klebedichtmasse gemäß einem der Ansprüche 16 bis 19,
**dadurch gekennzeichnet,**
**dass** sie einen Rheologie-Modifikator in einer Menge von 0 bis 20 Gew.-% und insbesondere von 0,5 bis 5 Gew.-% enthält, wobei der Rheologie-Modifikator insbesondere ausgewählt ist aus pyrogener Kieselsäure, Calciumcarbonat, insbesondere beschichteter Kreide, Cellulose-Derivate, insbesondere Carboxymethylcellulose, Kaolin, Acrylsäure- oder Rizinusderivaten und PUR-Verdickern.

21. Klebedichtmasse gemäß einem der Ansprüche 16 bis 20,
**dadurch gekennzeichnet,**
**dass** sie Weichmacher in einer Menge von 0 bis 20 Gew.-% und insbesondere 5 bis 15 Gew.-% enthält, wobei der Weichmacher insbesondere ausgewählt ist aus Phthalaten, Acrylsäureestern und aliphatischen Kohlenwasserstoffen.

22. Klebedichtmasse gemäß einem der Ansprüche 16 bis 21,
**dadurch gekennzeichnet,**
**dass** sie sonstige Additive in einer Menge von 0 bis 5 Gew.-% enthält und insbesondere wenigstens eine der Komponenten aus der Gruppe von pH-Regulatoren, Tensiden, Entschäumern, Stabilisatoren, Haftvermittlern, Trocknungsmitteln, wasserlöslichen anorganischen Salzen, Farbstoffen, Pigmenten, Konservierungsmitteln und Duftstoffen.

23. Klebedichtmasse gemäß einem der vorhergehenden Ansprüche,
**dadurch gekennzeichnet,**
**dass** sie einen Trockensubstanzanteil von größer 35 Gew.-%, insbesondere größer 50 Gew.-%, bevorzugt größer 65 Gew.-% und besonders bevorzugt größer 70 Gew.-%, enthält.

24. Klebedichtmasse nach einem der vorhergehenden Ansprüche,
**dadurch gekennzeichnet,**
**dass** sie im Trockenzustand eine Anfangshaftung gemäß FINAT-Testmethode Nr. 9 (FINAT Technisches Handbuch, 6. Ausgabe 2001) von mindestens 0,5 N und/oder
**dass** sie im Trockenzustand im Bereich von -10 bis +50 °C eine Schälfestigkeit nach DIN EN 1895:2001 gegenüber Polyolefin-Folien von mindestens 4 N/50 mm aufweist.

25. Klebedichtmasse gemäß einem der vorhergehenden Ansprüche,
**dadurch gekennzeichnet,**
**dass** sie eine Viskosität nach DIN EN 12092:2001 (Kegel-Platte-Viskosimeter-Verfahren; Scherrate 50 s⁻¹) von mindestens 5000 mPas, bevorzugt 15000 bis 25000 mPas, aufweist.

26. Klebedichtmasse gemäß einem der vorhergehenden Ansprüche,
**dadurch gekennzeichnet,**
**dass** sie einen pH-Wert im Bereich von 5 bis 10, bevorzugt von 7 bis 8,5 und insbesondere 7,5 bis 8,5 auf weist.

27. Verwendung der Dichtmasse gemäß einem der vorhergehenden Ansprüche zum Anbringen von Dampfsperren, Dampfbremsen und dampfdiffusionsoffenen Folien, zur Fugenabdichtung, zur Verklebung von Fensterfugenbändern, zur Verklebung von Dichtfolien im Bereich von Dächern, Fußböden, Fassaden, Fahrzeugen oder Fahrzeug-Anhängern, insbesondere Wohnwagen oder Wohnmobilen, und zum Ankleben von Polyolefin-Folien.

## Claims

1. A single-component adhesive sealant, containing a polyacrylate-containing polymer dispersion in an aqueous medium, **characterized in that** the adhesive composition comprises 5 to 30 percent by weight of a solvent mixture relating to its total quantity in the wet state, which mixture is composed of at least two of the following components:
A) an alcohol which is liquid at 25 °C with a boiling point of not more than 260 °C;
B) a non-halogenated hydrocarbon with a boiling point in the range of 100 to 260 °C;
C) a glycol ether with a boiling point in the range of 100 to 260 °C or an ester with a boiling point in the range of 100 to 260 °C whose acid residue comprises 2 to 4 carbon atoms and whose alcohol residue comprises 4 to 8 carbon atoms.

2. The adhesive sealant according to claim 1, **characterized in that** the alcohol A) is an alcohol with 1 to 5 carbon atoms, preferably a primary aliphatic alcohol with 1 to 3 carbon atoms, especially ethanol.

3. The adhesive sealant according to claim 1, **characterized in that** the alcohol A) is chosen from 2-ethyl hexanol, 2-ethyl hexandiol, and dodecanol.

4. The adhesive sealant according to one of the preceding claims, **characterized in that** the hydrocarbon B) is an aliphatic naphthenic hydrocarbon with a boiling point in the range of 150 to 230 °C.

5. The adhesive sealant according to one of the preceding claims, **characterized in that** the solvent C) has a boiling point in the range of 120 to 200 °C, and is preferably butyl glycol acetate, butyl acetate or butyl proprionate.

6. The adhesive sealant according to one of the preceding claims, **characterized in that** the aqueous polymer dispersion is present, relating to the total quantity of the adhesive composition in the wet state, in a quantity of 30 to 95 percent by weight, preferably 40 to 70 percent by weight, and more preferably 40 to 55 percent by weight.

7. The adhesive sealant according to one of the preceding claims, **characterized in that** the polymerisat content in the aqueous polymer dispersion is 30 to 85 percent by weight, preferably 45 to 75 percent by weight, and more preferably 55 to 75 percent by weight.

8. The adhesive sealant according to one of the preceding claims, **characterized in that** the share of polyacrylate in the acqueous polymer dispersion is at least 50 parts by weight relating to 100 parts by weight of polymer, and especially **in that** apart from polyacrylate no further polymers are contained in the acqeous polymer dispersion.

9. The adhesive sealant according to one of the preceding claims, **characterized in that** the polyacrylate polymer is such a one on the basis of C₁₋₂₄ alkyl (meth) acrylates and especially a copolymer of (meth) acrylic acid alkyl ester with 1 to 12 carbon atoms in the alkyl residue, preferably 2 to 8 carbon atoms in the alkyl residue, with at least one co-polymerizable monomer which is preferably chosen from unsaturated carboxylic acids, especially (meth) acrylic acid, vinyl monomers, especially vinyl esters or vinyl aromatics, and monoolefinic unsaturated nonaromatic hydrocarbons.

10. The adhesive sealant according to one of the preceding claims, **characterized in that** the alcohol A) is present in a quantity of 0 to 99 percent by weight, preferably 40 to 70 percent by weight relating to the total quantity of the components A) + B) + C).

11. The adhesive sealant according to one of the preceding claims, **characterized in that** the hydrocarbon B) is present in a quantity of 0 to 99 percent by weight, especially 15 to 60 percent by weight relating to the total quantity of the components A) + B) + C).

12. The adhesive sealant according to one of the preceding claims, **characterized in that** the solvent C) is present in a quantity of 0 to 99 percent by weight, especially 15 to 60 percent by weight relating to the total quantity of the components A) + B) + C).

13. The adhesive sealant according to one of the preceding claims, **characterized in that** the solvent mixture consists of a combination of the components A) + B) or A) + C).

14. The adhesive sealant according to claim 13, **characterized in that** the alcohol A) in the solvent mixture is present in a quantity of 30 to 70 percent by weight, especially 40 to 60 percent by weight and preferably 50 percent by weight.

15. The adhesive sealant according to one of the preceding claims, **characterized in that** it consists of the polyacrylate-containing aqueous polymer dispersion, the solvent mixture and optionally additives.

16. The adhesive sealant according to one of the preceding claims, **characterized in that** it contains additives in a quantity of 0 to 65 percent by weight, preferably 10 to 50 percent by weight and especially 30 to 50 percent by weight.

17. The adhesive sealant according to claim 16, **characterized in that** filler materials are contained as an additive in a quantity of 0 to 40 percent by weight and preferably 20 to 35 percent by weight.

18. The adhesive sealant according to claim 16 or 17, **characterized in that** inorganic or organic filler materials are present as additives, especially filler materials chosen from alkaline-earth metal sulphates or carbonates, silicates, metal oxides and hydroxides, nut semolina, natural and synthetic fibers, especially gypsum fibers, plastic waste or plastic recycling material in the form of dust, flocks or flours.

19. The adhesive sealant according to one of the claims 16 to 18, **characterized in that** it contains tackifiers in a quantity of 0 to 30 percent by weight and preferably 5 to 15 percent by weight, with the tackifier being chosen especially from hydrocarbon resins, colophonium resins, acrylic esters or polyisobutylene.

20. The adhesive sealant according to one of the claims 16 to 19, **characterized in that** it contains a rheology modifier in a quantity of 0 to 20 percent by weight and especially 0.5 to 5 percent by weight, with the rheology modifier being chosen especially from pyrogenic silicic acid, calcium carbonate, especially coated chalk, cellulose derivatives, especially carboxymethyl cellulose, kaolin, acrylic acid or castor oil derivatives and polyurethane thickeners.

21. The adhesive sealant according to one of the claims 16 to 20, **characterized in that** it contains softening agents in a quantity of 0 to 20 percent by weight and especially 5 to 15 percent by weight, with the softening agent being chosen especially from phthalates, acrylic acid esters and aliphatic hydrocarbons.

22. The adhesive sealant according to one of the claims 16 to 21, **characterized in that** it contains other additives in a quantity of 0 to 5 percent by weight and especially at least one of the components from the group of pH-regulators, tensides, defoaming agents, stabilizers, adhesive agents, drying agents, water-soluble inorganic salts, dyes, pigments, preservatives and flavours.

23. The adhesive sealant according to one of the preceding claims, **characterized in that** it contains a dry-substance share of more than 35 percent by weight, especially more than 50 percent by weight, preferably more than 65 percent by weight and more preferably 70 percent by weight.

24. The adhesive sealant according to one of the preceding claims, **characterized in that** it has in the dry state an initial adhesive strength according to FINAT testing method No. 9 (FINAT Technical Manual, 6^{th} Edition 2001) of at least 0.5 N and/or **in that** in the dry state it has in the range of -10 to +50 °C a peel strength according to DIN EN 1895:2001 relative to polyolefin films of at least 4 N/50 mm.

25. The adhesive sealant according to one of the preceding claims, **characterized in that** it has a viscosity according to DIN EN 12092:2001 (cone-plate viscometer method; shearing rate 50 s⁻¹) of at least 5000 mPas, preferably 15000 to 25000 mPas.

26. The adhesive sealant according to one of the preceding claims, **characterized in that** it has a pH-value in the range of 5 to 10, preferably 7 to 8.5 and more preferably 7.5 to 8.5.

27. The use of the adhesive sealant according to one of the preceding claims for applying moisture barriers, moisture stops and films open to moisture diffusion, for sealing joints, for gluing window water stops, for gluing sealing films in the area of roofs, floors, facades, vehicles or trailers, especially caravans or motor homes, and for gluing polyolefin films.

## Revendications

1. Mastic d'étanchéité adhésive à un composant du type contenant une dispersion aqueuse de polymère contenant du polyacrylate,
**caractérisé en ce**
**que**, rapporté à sa quantité totale à l'état humide, le mastic d'étanchéité adhésive comprend de 5 à 30 % en poids d'un mélange de solvant qui est composé d'au moins deux des composants suivants :
A) d'un alcool liquide à 25 °C dont le point d'ébullition maximum est de 260 °C,
B) d'un hydrocarbure non halogéné dont le point d'ébullition est compris entre 100 et 260 °C,
C) d'un éther de glycol dont le point d'ébullition est compris entre 100 et 260 °C ou d'un ester dont le point d'ébullition est compris entre 100 et 260 °C et dont l'acide restant comporte 2 à 4 atomes de carbone et dont l'alcool restant comporte 4 à 8 atomes de carbone.

2. Mastic d'étanchéité adhésive selon la revendication 1,
**caractérisé en ce**
**que** l'alcool A) est un alcool possédant 1 à 5 atomes de carbone, de préférence un alcool aliphatique primaire possédant 1 à 3 atomes de carbone, notamment de l'éthanol.

3. Mastic d'étanchéité adhésive selon la revendication 1,
**caractérisé en ce**
**que** l'alcool A) est choisi parmi le 2 éthyl hexanol, le 2 éthylhexanediol et le dodécanol.

4. Mastic d'étanchéité adhésive selon l'une quelconque des revendications précédentes,
**caractérisé en ce**
**que** l'hydrocarbure B) est un hydrocarbure naphthénique aliphatique dont le point d'ébullition est compris entre 150 et 230 °C.

5. Mastic d'étanchéité adhésive selon l'une quelconque des revendications précédentes,
**caractérisé en ce**
**que** le point d'ébullition du solvant C) est compris entre 120 et 200 °C et est de préférence de l'acétate de butylglycol, de l'acétate de butyle ou du propionate de butyle.

6. Mastic d'étanchéité adhésive selon l'une quelconque des revendications précédentes,
**caractérisé en ce**
**que** la dispersion aqueuse de polymère constitue 30 à 95 % en poids, de préférence 40 à 70 % en poids, et plus particulièrement 40 à 55 % en poids, rapporté à la quantité totale de mastic d'étanchéité adhésive à l'état humide.

7. Mastic d'étanchéité adhésive selon l'une quelconque des revendications précédentes,
**caractérisé en ce**
**que** la teneur en polymère dans la dispersion aqueuse de polymère est comprise entre 30 et 85 % en poids, de préférence entre 45 et 75 % en poids et plus particulièrement entre 55 et 75 % en poids.

8. Mastic d'étanchéité adhésive selon l'une quelconque des revendications précédentes,
**caractérisé en ce**
**que** la fraction de polyacrylate dans la dispersion aqueuse de polymère est d'au moins 50 parties en poids, rapporté à 100 parties en poids de polymère, et que la dispersion aqueuse de polymère ne contient aucun autre polymère que le polyacrylate.

9. Mastic d'étanchéité adhésive selon l'une quelconque des revendications précédentes,
**caractérisé en ce**
**que** le polymère polyacrylate est un polymère à base de C₁₋₂₄-(méth)acrylates d'alkyle et notamment un copolymère d'ester d'acide (méth)acrylique possédant 1 à 12 atomes de carbone dans le résidu alkyle, de préférence 2 à 8 atomes de carbone dans le résidu alkyle, avec au moins un monomère copolymérisable de préférence choisi parmi les acides carboxyliques insaturés, notamment l'acide (méth)acrylique, les monomères de vinyle, notamment les esters de vinyle ou les vinyles aromatiques, et les hydrocarbures non aromatiques, insaturés mono-oléfiniques.

10. Mastic d'étanchéité adhésive selon l'une quelconque des revendications précédentes,
**caractérisé en ce**
**que** l'alcool A) constitue 0 à 99 % en poids, de préférence 40 à 70 % en poids, rapporté à la quantité totale des composants A) + B) + C).

11. Mastic d'étanchéité adhésive selon l'une quelconque des revendications précédentes,
**caractérisé en ce**
**que** l'hydrocarbure B) constitue 0 à 99 % en poids, notamment 15 à 60 % en poids, rapporté à la quantité totale des composants A) + B) + C).

12. Mastic d'étanchéité adhésive selon l'une quelconque des revendications précédentes,
**caractérisé en ce**
**que** le solvant C) constitue 0 à 99 % en poids, notamment 15 à 60 % en poids, rapporté à la quantité totale des composants A) + B) + C).

13. Mastic d'étanchéité adhésive selon l'une quelconque des revendications précédentes,
**caractérisé en ce**
**que** le mélange de solvants est composé d'une combinaison des composants A) + B) ou A) + C).

14. Mastic d'étanchéité adhésive selon la revendication 13,
**caractérisé en ce**
**que** la teneur d'alcool A) dans le mélange de solvants est comprise entre 30 et 70 % en poids, notamment entre 40 et 60 % en poids et est de préférence de 50 % en poids.

15. Mastic d'étanchéité adhésive selon l'une quelconque des revendications précédentes,
**caractérisé en ce**
**qu'**il est constitué de la dispersion aqueuse de polymère contenant du polyacrylate, du mélange de solvants et le cas échéant d'additifs.

16. Mastic d'étanchéité adhésive selon l'une quelconque des revendications précédentes,
**caractérisé en ce**
**qu'**il contient des additifs à raison de 0 à 65 % en poids, de préférence de 10 à 50 % en poids et plus particulièrement de 30 à 50 % en poids.

17. Mastic d'étanchéité adhésive selon la revendication 16,
**caractérisé en ce**
**que** les additifs qu'il contient sont des charges dont la teneur est comprise entre 0 et 40 % en poids et de préférence entre 20 et 35 % en poids.

18. Mastic d'étanchéité adhésive selon la revendication 16 ou 17,
**caractérisé en ce**
**que** les additifs qu'il contient sont des charges inorganiques ou organiques, notamment des charges choisies parmi les sulfates ou les carbonates de métaux alcalino-terreux, les silicates, les oxydes et hydroxydes de métaux, les poudres de noix, les fibres naturelles et synthétiques, notamment les fibres de plâtre, et les déchets de matière plastique ou les matières plastiques recyclées sous forme de poudres, de paillettes ou de farines.

19. Mastic d'étanchéité adhésive selon l'une quelconque des revendications 16 à 18,
**caractérisé en ce**
**que** la quantité d'agents collants qu'il contient est comprise entre 0 et 30 % en poids et de préférence entre 5 et 15 % en poids, l'agent collant étant notamment choisi parmi les résines d'hydrocarbure, la colophane, les esters acryliques ou le polyisobutylène.

20. Mastic d'étanchéité adhésive selon l'une quelconque des revendications 16 à 19,
**caractérisé en ce**
**que** la quantité de modificateur de rhéologie qu'il contient est comprise entre 0 et 20 % en poids et notamment entre 0,5 et 5 % en poids, le modificateur de rhéologie étant notamment choisi parmi l'acide de silice pyrogénée, le carbonate de calcium, notamment la craie revêtue, les dérivés de cellulose, notamment la carboxyméthylcellulose, le kaolin, les dérivés d'acide acrylique ou de ricin et les épaississants polyuréthane.

21. Mastic d'étanchéité adhésive selon l'une quelconque des revendications 16 à 20,
**caractérisé en ce**
**que** la quantité de plastifiants qu'il contient est comprise entre 0 et 20 % en poids et notamment entre 5 et 15 % en poids, le plastifiant étant notamment choisi parmi les phtalates, les esters d'acide acrylique et les hydrocarbures aliphatiques.

22. Mastic d'étanchéité adhésive selon l'une quelconque des revendications 16 à 21,
**caractérisé en ce**
**que** la quantité d'autres additifs qu'il contient est comprise entre 0 et 5 % en poids et qu'il contient notamment au moins un des composants du groupe formé par les régulateurs de pH, les tensioactifs, les agents anti-mousse, les stabilisateurs, les liants, les agents desséchants, les sels anorganiques hydrosolubles, les colorants, les pigments, les conservateurs et les arômes.

23. Mastic d'étanchéité adhésive selon l'une quelconque des revendications précédentes,
**caractérisé en ce**
**qu'**il contient une fraction de matière sèche supérieure à 35 % en poids, notamment supérieure à 50 % en poids, de préférence supérieure à 65 % en poids, une préférence particulière étant accordée à une fraction de matière sèche supérieure à 70 % en poids.

24. Mastic d'étanchéité adhésive selon l'une quelconque des revendications précédentes,
**caractérisé ence**
**qu'**à l'état sec il possède une adhérence initiale conforme à la méthode d'essai FINAT n° 9 (FINAT manuel technique, 6^{ème} édition 2001) d'au moins 0,5 N et/ou
qu'à l'état sec, entre -10 et + 50°, il présente une résistance au pelage selon DIN EN 1895 :2001 d'au moins 4/50 mm par rapport à des feuilles de polyoléfine.

25. Mastic d'étanchéité adhésive selon l'une quelconque des revendications précédentes,
**caractérisé en ce**
**qu'**il présente une viscosité selon DIN EN 12092 :2001 (méthode au viscosimètre à cône/plan ; taux de cisaillement 50 s⁻¹) d'au moins 5000 mPa.s, de préférence une viscosité comprise entre 15 000 et 25 000 mPa.s.

26. Mastic d'étanchéité adhésive selon l'une quelconque des revendications précédentes,
**caractérisé en ce**
**qu'**il a un pH compris entre 5 et 10, de préférence entre 7 et 8,5 et notamment entre 7,5 et 8,5.

27. Utilisation de la masse d'étanchéité adhésive selon l'une quelconque des revendications précédentes dans la pose de pare-vapeurs, de coupe-vapeurs et de feuilles permettant la diffusion de la vapeur, pour le calfeutrage, pour le collage des rubans pour joints de fenêtres, pour le collage de feuilles d'étanchéité adhésive en toiture, au sol, sur les façades, dans les véhicules ou les remorques, notamment dans les caravanes ou les camping-cars, et pour le collage de feuilles de polyoléfine.
